# EUROPEAN PATENT APPLICATION

(11) **EP 4 001 627 A1**
(43) Date of publication of application: **25.05.2022**
(21) Application number: 21209386.8
(22) Date of filing: 19.11.2021
(51) Int. Cl.: F02K 1/38

(54) **EXHAUST MIXER**

(30) Priority: 20.11.2020 US 202016953935
(71) Applicant: PRATT & WHITNEY CANADA CORP., Longueuil, Québec J4G 1A1 (CA)
(72) Inventor: JOSHI, Ninad, (01BE5) Longueuil, J4G 1A1 (CA)
(74) Representative: Dehns

(57) **Abstract**

The exhaust mixer (32; 132; 232; 332) can have a conduit (134) extending around a central axis, and along the axis to a trailing edge (38; 138), the conduit (134) extending between a radially-outer bypass path (24; 124) and a radially-inner core gas path (26; 126), the conduit (134) having a plurality of apertures (150; 250; 350) spaced-apart from one another around the circumference of the conduit (134) and fluidly connecting the bypass path (24; 124) to the core gas path (26; 126) upstream of the trailing edge (38; 138).

## Description

### TECHNICAL FIELD

The application relates generally to gas turbine engines and, more particularly, to turbofan exhaust mixers.

### BACKGROUND OF THE ART

Most modern turbofan engines are designed in a manner to harness advantagesof mixing between the slower, colder bypass flow and the hotter, faster core engine exhaust gasses. Harnessing the advantages can involve carefully designing the interface between the bypass flow and the exhaust gasses: the part of the gas turbine engine referred to as the mixer.

Several, sometimes competing, advantages can exist, and the choice of the advantage(s) which will receive the designer's focus is dependent on the specificities of the particular application. Such potential advantages can include lower noise, higher thrust, lower exhaust temperature (often significant in military aircraft to avoid hostile heat seeking/detecting devices), and lower pressure losses. The gain in thrust is typically achieved by simultaneously transferring momentum of faster portions of the flow to slower portions of the flow, with the aim of achieving greater thrust for a same amount of energy (the thrust being proportional to speed while energy being proportional to speed squared), but often at the cost of a certain energy losses, often referred to as pressure losses in this context.

Mixers can be considered to be separated in two general categories. Annular mixers are perhaps the simplest kind and typically include an annular rear edge separating the bypass and core/exhaust streams. The bypass and core streams are brought together co-annularly downstream of the annular edge, and mixing is achieved by shearing between the flows. Annular mixers typically offer the benefit of a low pressure loss. Forced mixers involve intertwining hot and cold chutes, typically in the form of circumferentially disposed mixer lobes that alternately extend radially outwards (crests) and inwards (valleys) to create a circumferentially alternating sequence of hot and cold plumes.

While significant engineering efforts have been made over the last decades to improve and optimize mixer designs, there always remains room for improvement.

### SUMMARY

In one aspect, there is provided a turbofan exhaust mixer comprising a conduit extending around a central axis, and along the axis to a trailing edge, the conduit extending between a radially-outer bypass path and a radially-inner core gas path, the conduit having a plurality of apertures spaced-apart from one another around the circumference of the conduit and fluidly connecting the bypass path to the core gas path upstream of the trailing edge.

The apertures may be circular apertures equally interspaced from one another around the circumference of the conduit. The apertures may be rectangular apertures equally interspaced from one another around the circumference of the conduit.

The exhaust mixer may be of a forced mixer type, wherein the conduit has a plurality of circumferentially distributed lobes at a downstream end, the lobes including alternating valleys and crests, the valleys and crests having respective upstream ends merging with an annular segment of the conduit and fanning out in opposite radial orientations from the upstream ends to the downstream edge.

The apertures may be disposed in the valleys. The apertures may be disposed in the crests. The apertures may be disposed both in the crests and in the valleys.

The trailing edge may have radially oriented portions between the valleys and crests, the radially oriented portions being scalloped axially inwardly.

In another aspect, there is provided a method of operating a turbofan engine including separating an intake flow into a core gas flow and a bypass flow, generating a hot annular stream of combustion gasses exiting a combustion chamber in the core gas flow, and recombining the core gas flow and the bypass flow downstream of the combustion chamber, the method comprising pre-mixing a portion of at least one of the core gas flow and the bypass flow with the other downstream of the combustion chamber and upstream of recombining the core gas flow and the bypass flow. The method may be carried out using the above turbofan exhaust mixer.

In a further aspect, there is provided a turbofan engine comprising an exhaust mixer, the exhaust mixer having a conduit extending around a central axis, and along the axis to a trailing edge, the conduit extending between a radially-outer bypass path and a radially-inner core gas path, the conduit having a plurality of apertures spaced-apart from one another around the circumference of the conduit and fluidly connecting the bypass path to the core gas path upstream of the trailing edge.

The apertures may be circular apertures equally interspaced from one another around the circumference of the conduit. The apertures may be rectangular apertures equally interspaced from one another around the circumference of the conduit.

The exhaust mixer may be of a forced mixer type, wherein the conduit has a plurality of circumferentially distributed lobes at a downstream end, the lobes including alternating valleys and crests, the valleys and crests having respective upstream ends merging with an annular segment of the conduit and fanning out in opposite radial orientations from the upstream ends to the downstream edge.

The apertures may be disposed in the valleys. The apertures may be disposed in the crests. The apertures may be disposed both in the crests and in the valleys.

The trailing edge may have radially oriented portions between the valleys and crests, the radially oriented portions being scalloped axially inwardly.

### DESCRIPTION OF THE DRAWINGS

Reference is now made to the accompanying figures in which:
Fig. 1 is a schematic cross-section view of a turbofan gas turbine engine having an exhaust mixer;
Fig. 2 is a rear isometric view of a forced exhaust mixer;
Fig. 3 is an oblique view of a forced exhaust mixer, in accordance with an embodiment;
Fig. 4A and Fig. 4B present flow simulation results using the mixer of Fig. 3;
Fig. 5 is an oblique view of a forced exhaust mixer, in accordance with another embodiment;
Fig. 6 presents flow simulation results using the mixer of Fig. 5;
Fig. 7 is an oblique view of a forced exhaust mixer, in accordance with another embodiment;
Fig. 8 presents flow simulation results using the mixer of Fig. 7;
Fig. 9A and 9B are heat maps showing flow temperature at a first axial position, with and without an aperture, respectively;
Fig. 10A and 10B are heat maps showing flow temperature at a second axial position, with and without an aperture, respectively; and
Fig. 11 presents a graph showing maximum turbulent kinetic energy at different axial sections for different mixer configurations.

### DETAILED DESCRIPTION

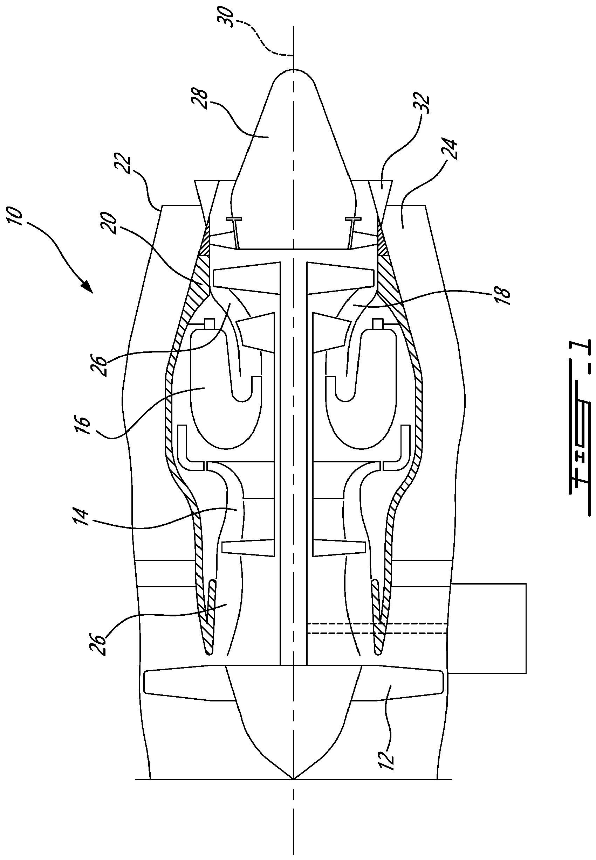

Fig. 1 illustrates a turbofan gas turbine engine 10 of a type preferably provided for use in subsonic flight, generally comprising in serial flow communication a fan 12 through which ambient air is propelled, a multistage compressor 14 for pressurizing the air, a combustor 16 in which the compressed air is mixed with fuel and ignited for generating an annular stream of hot combustion gases, and a turbine section 18 for extracting energy from the combustion gases.

The gas turbine engine 10 includes a first casing 20 which encloses the turbo machinery of the engine, and a second, outer casing 22, sometimes referred to as a bypass duct, extending outwardly of the first casing 20 such as to define an annular bypass passage 24 therebetween. The air propelled by the fan 12 is split into a first portion which flows around the first casing 20 within the bypass passage 24, and a second portion which flows through a core gas path 26 which is defined within the first casing 20 and allows the flow to circulate through the multistage compressor 14, combustor 16 and turbine section 18 as described above.

At the aft end of the engine 10, a component commonly referred to as a centerbody 28, shaped somewhat as an axisymmetrical bullet, is centered on a longitudinal axis 30 of the engine 10 and defines a downstream portion of an inner wall of the core flow path 26 so that the combustion gases flow therearound as they exit to the atmosphere. An exhaust mixer 32 has a conduit extending radially between the bypass duct and the centerbody, forming a radially outer limitation to the core gas path and a radially inner limitation to the bypass flow path. The mixer 32 conduit acting as a rearmost portion of the outer wall defining the core flow path 26 and a rearmost portion of the inner wall defining the bypass passage 24. The hot combustion gases from the core flow path 26 and the cooler air from the bypass passage 24 are, thus, mixed together by the mixer 32 at the exit thereof such as to produce a combined exhaust stream having a somewhat averaged temperature.

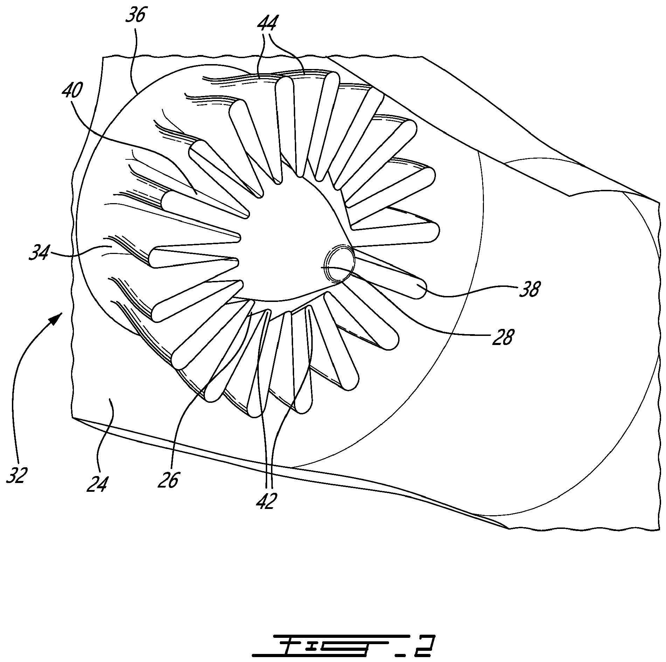

As shown in Fig. 2, the mixer 32 may include an annular sheet metal wall 34 defining an upstream end 36 along which the flows from the core flow path 26 and from the bypass passage 24 are received, and a downstream end 38 where the two flows meet and are mixed together. The annular wall 34 defines a plurality of circumferentially distributed lobes. The lobes include alternating inner and outer lobes 40 or valleys 42 and crests 44, with the crests 44 extending radially outwardly into the bypass passage 24 and the valleys 42 extending radially inwardly into the core flow path 26. As such, the valleys 42 define troughs in the bypass passage 24 in between adjacent ones of the crests 44, while the crests 44 define troughs in the core flow path 26 in between adjacent ones of the valleys 42. It will be noted that the schematic image presented in Fig. 1 can be associated to a short cowl engine example, and that in many alternate embodiments, the engine can be a long cowl engine instead. Moreover, it will be noted that while the lobes are regularly shaped around the circumference, alternate embodiments may have some form of irregularity to the lobe shape, such as to accommodate the flow geometry disruptions caused by upstream features for instance.

In alternate embodiments, such as ones commonly referred to as confluent mixer design, the mixer 32 can have a simple annular conduit leading to the downstream end 38 rather than the lobes 40.

In an embodiment such as the one shown in Fig. 2, the lobes 40 can be used to produce greater thrust with a given fluid energy and therefore reduce fuel consumption, for instance. The design space of the lobes 40 can include lobe-counts, lobe-penetration, area ratio, scallop-shapes etc. These geometries can induce very efficient mixing of the core 26 and bypass 24 streams by the creation of strong vortical flow structures in streamwise and radial directions, with the typically undesired side-effect of noise generation.

The exhaust mixer 32 can induce strong vortical flow structures comprising of both small-scale turbulence and/or large scale eddies within the flow. The creation of fine-scale turbulence can be driven by geometric details of the mixer 32 and can have a strong influence on the generation of medium to high frequency noise, which can be the dominant source of noise from approximately 70 to 110 degrees from the longitudinal axis 30 of the engine 10 (inlet considered 0 degrees). On the other hand, large scale eddies can be created by the coalescence of fine/small scale turbulent eddies that interact and propagate downstream thereby creating low frequency noise, which can be the dominant source of noise beyond 130 degrees from the longitudinal axis 30 for instance.

A design which increases the mixing efficiency, and thus the thrust, at a relativelyhigh cost in terms of noise generation can be qualified as "aggressive", for instance. In some cases, less aggressive designs will be favored, at the cost of the additional thrust,simply because a hard limit is imposed in terms of noise generation. Different limits in terms of noise generation can be imposed on different frequencies of noise. The mixer 32 can contribute to increasing the perceived noise level in the mid-frequency content, for instance, and may penalize the aircraft during certification flight tests.

Selecting a less aggressive mixer 32 design may imply, depending on the specific application, reducing the axial and/or radial span of the lobes 40, the number of lobes 40, or even omitting the lobes 40 entirely, for instance, and may help satisfy noise level requirements at the cost of thrust and fuel economy.

It was found that at least in some embodiments, mixing efficiency could be improved by giving the bypass 24 and core 26 flows the opportunity of an early start at mixing. Moreover, it was found that in such embodiments, the increased mixing efficiency could be achieved without the inconveniences associated to higher noise generation. This early start at mixing can be provided by providing apertures in the mixer's 32 conduit, upstream of the downstream end/trailing edge 38 of the conduit. The apertures can be circumferentially distributed around the circumference of the conduit and create fluid connections between the bypass flow path 24 and the core flow path 26. The fine scale turbulence created due to these holes can contribute to the mixing efficiency while the noise generated in the process can be shielded by the dominant mixing created by the trailing edge 38 of the mixer 32.

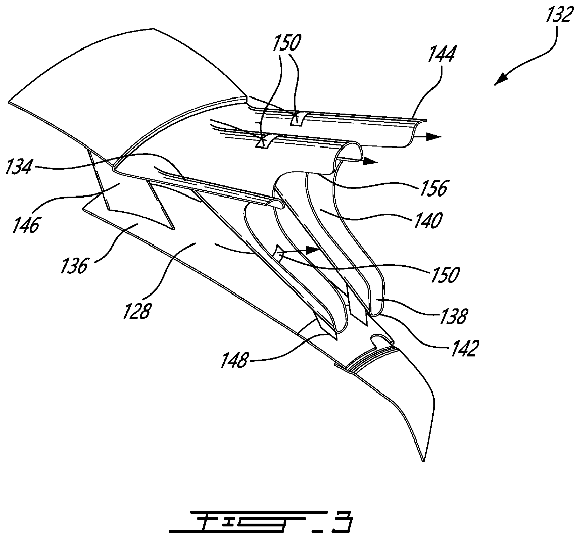

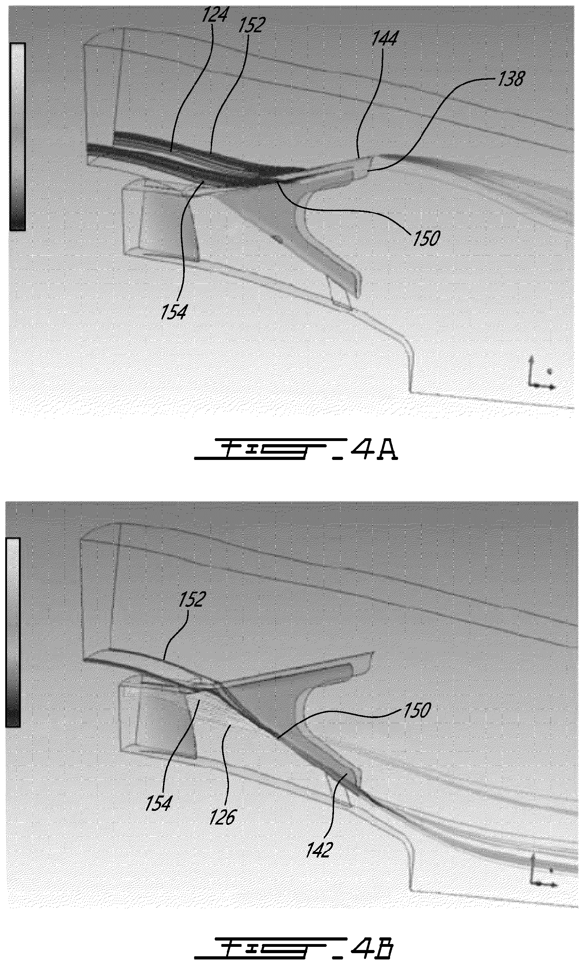

Fig. 3 presents an example of an exhaust mixer 132 being designed in a mannerto provide such an opportunity of an early start at mixing. In the embodiment presented in Fig. 3, the mixer's conduit 134 is of the forced mixing type, and thus includes a pluralityof lobes 140, similar to the embodiment shown in Fig. 2. The mixer's conduit 134 spans a portion of the centerbody 128, extending axially from an annular upstream end 136, or segment, to the alternatingly radially fanning crests 144 and valleys 142 towards the downstream edge 138. In this embodiment, an annular segment of the conduit 134 extends downstream of the rearmost turbine exhaust strut 146 to the point or points where the crests 144 and valleys 142 start forming. A downstream end 138 portion of the valleys 142 can be structurally connected to the centerbody 128 via support struts 148, for instance. It will be noted that the support struts are specific to the illustrated embodiment and may be absent in alternate embodiments. Depending on the embodiment, the apertures 150 can be formed through one, or both, of the crests 144 and valleys 142, and/or be defined across the annular segment, for instance. In the embodiment presented in Fig. 3, rectangular apertures 150 are formed roughly midway along both the crests 144 and the valleys 142. The crests 144 and valleys 142 being regularly configured, the apertures 150 are regularly spaced apart from one another around the periphery. The effect on the flow is presented in the simulation results presented in Fig. 4A and 4B. As shown in Fig. 4A, colder flow 152 from the bypass flow path 124 can penetrate the apertures 150 formed through the crests 144 and give an early start to mixing with the hotter flow 154, while also potentially causing some fine turbulence which can be beneficial to mixing downstream. As shown in Fig. 4A, the portion of the colder flow 152 which penetrates into the hotter exhaust flow tends to remain close to the crest 144 as it travels towards the trailing edge 138 of the conduit 134. As shown in Fig. 4B, hotter flow 154 from the core flow path 126 penetrates the apertures 150 formed through the valleys 142 and gives an early start to mixing with the colder flow 152, while also potentially causing some fine turbulence which can be beneficial to mixing downstream. Any noise generated by the early penetration of each flow into the other can remain significantly shielded from the atmosphere, especially when the length of the exhaust nozzle is significant, and thereby have a limited effect, if any, on the overall perceived noise levels. It will be noted that the particular embodiment presented in Fig. 3 has scallops 156 formed in the radially extending portions of the trailing edge 138, which is one of several possible design choices. Chevrons can be preferred in other embodiments, or straight edges. In the specific embodiment presented in Fig. 3, the apertures 150 are short rectangular, almost square.

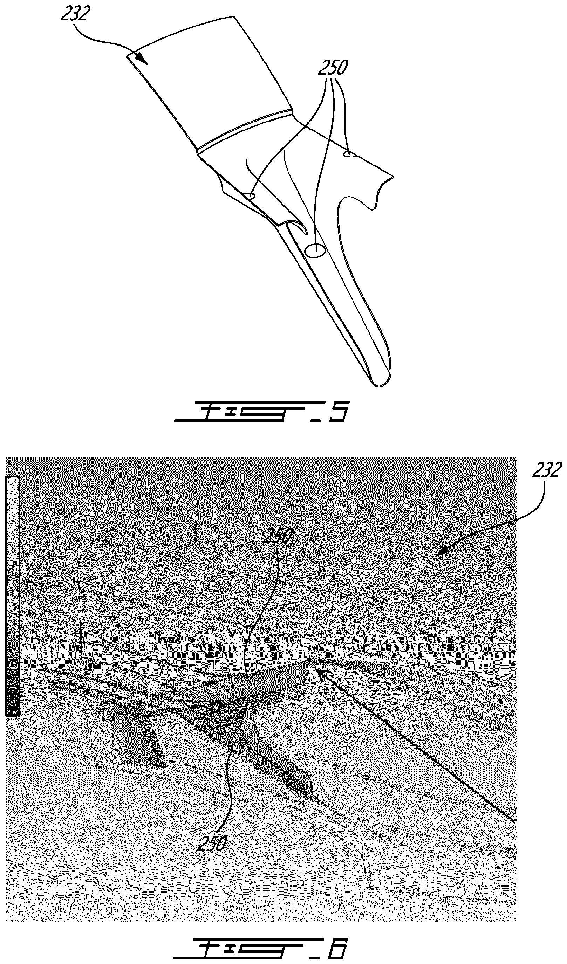

Fig. 5 presents yet another embodiment of an exhaust mixer 232. In the embodiment presented in Fig. 5, the apertures 250 are circular, without scoops. Fig. 6 presents the simulation results using the circular apertures 250 shown in Fig. 5, and it can be seen that suitable results can also be achieved with circular apertures, comparable to the square-shaped apertures 150 presented above in relation with Fig. 3.Accordingly, since both rectangular 150 and circular apertures 250 can provide good results, it is considered that elliptical apertures, and other aperture shapes could also likely work.

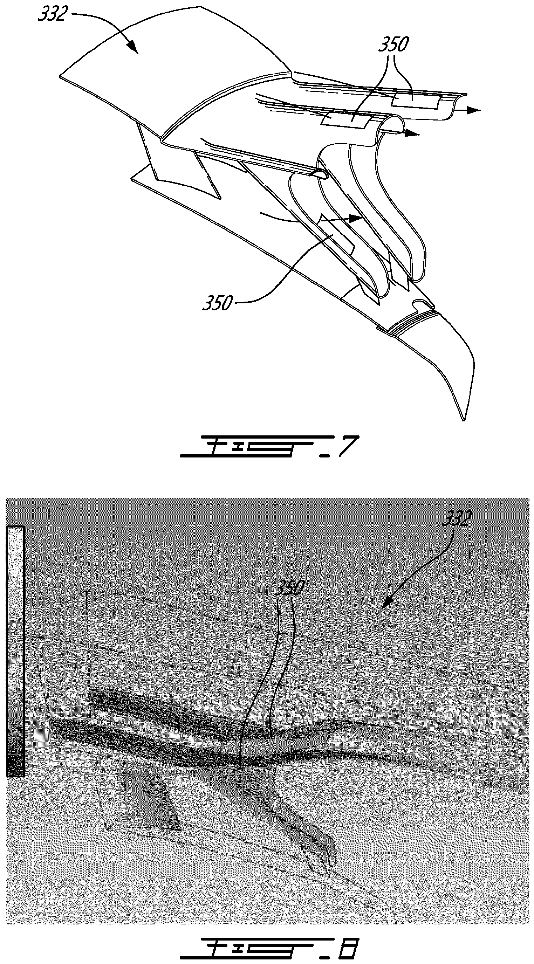

Fig. 7 presents yet another embodiment of an exhaust mixer 332 in which the apertures 350 are elongated rectangular, with a length oriented stream-wise as shown. Flow simulation results are presented in Fig. 8.

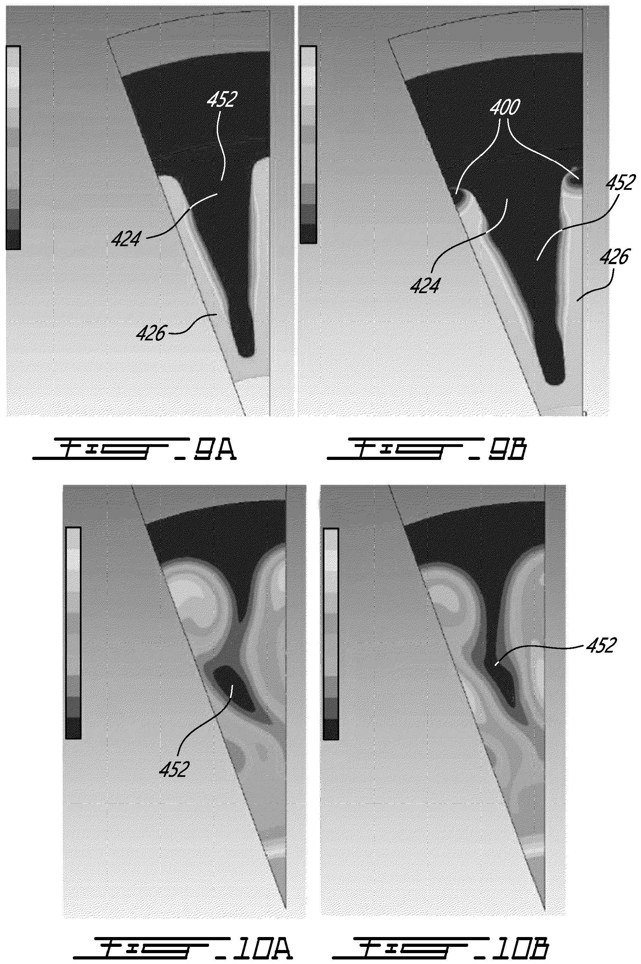

Figs 9A and 9B, and Figs. 10A and 10B, both provide additional flow simulation results comparing an embodiment with the rectangular apertures such as presented in Fig. 7 (Fig. 9B and 10B), with an identical embodiment except without the rectangular apertures (Fig. 9A and 10A). The simulation results of these figures are transversal cross section heat maps showing a representative portion of around the circumference, with Figs 9A and 9B being taken immediately downstream of the axial location of the apertures, and Figs. 10A and 10B being taken downstream of the trailing edge of the conduit. Fig. 9B shows the occurrence of pre-mixing 400 of core 426 and bypass flows 424 in the mixing plane using the apertures. Fig. 10B shows the deeper penetration of the cold flow 452 achieved using the apertures. Thus demonstrating the ability to customize and optimize the flow-field downstream of the mixer.

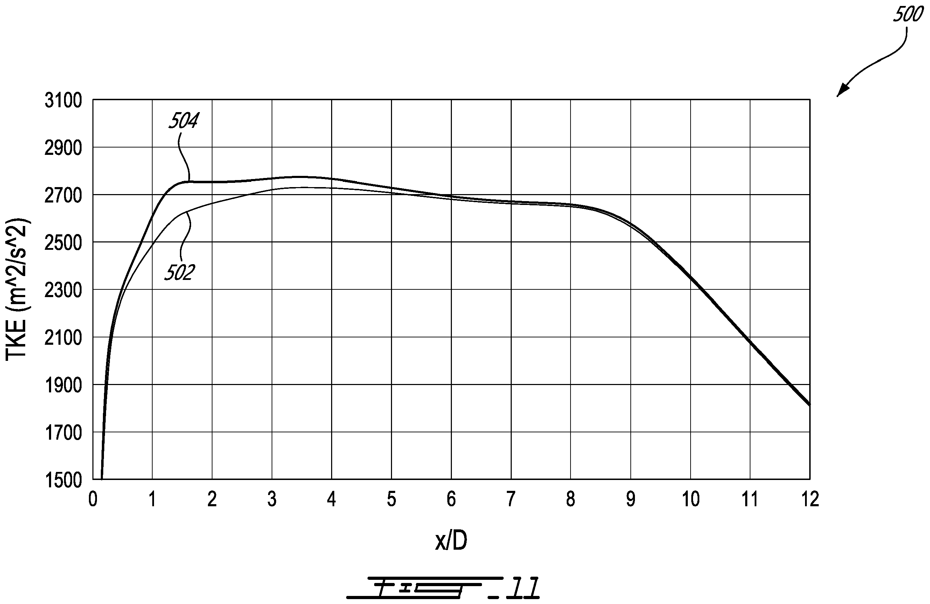

Fig. 11 is a graph 500 showing the variations in max turbulent kinetic energy vs. axial planes for the mixer with rectangular apertures 502 and without apertures 504, of the same configurations used to produce Figs. 9A, 9B, 10A and 10B. Different aperture geometries can exhibits different flow topologies downstream of the mixer.

The embodiments described in this document provide non-limiting examples of possible implementations of the present technology. Upon review of the present disclosure, a person of ordinary skill in the art will recognize that changes may be made to the embodiments described herein without departing from the scope of the present technology. For example, in some embodiments, it can be preferred to introduce apertures in an annular portion of the conduit. This can be useful in an annular portion of the conduit, upstream of the crests and valleys, in a forced mixer-type conduit, or in an annular conduit (non-forced mixing). In practice, there can be more benefit, to a certain extent, to introducing the apertures as upstream as possible, but without otherwise interfering with the operation of the turbofan. The apertures can be located at any suitable position between the turbine section and the trailing edge of the conduit, for instance. Depending on the embodiment, the pre-mixing apertures can be integrated with the hardware forming the wall between the core engine and the bypass path. The apertures can be permanent, or be made to be commanded to open and close by mechanical, electrical, magnetic, hydraulic or other suitable means. The command to open or close can be initiated manually by the pilot, or be automated by integrating it into the control system. The pre-mixing slots can also be actuated to open or close using thermally responsive components, such as bi-metallic strips. Similarly, pre-mixing slots can be actuated to open or close using thermally-responsive smart materials like Ti-Ni alloys or the like. The apertures can be introduced for any suitable goal, such as thrust increase, noise reduction, etc. Yet further modifications could be implemented by a person of ordinary skill in the art in view of the present disclosure, which modifications would be within the scope of the present technology.

## Claims

1. An exhaust mixer (32; 132; 232; 332) comprising a conduit (134) extending around a central axis and along the axis to a downstream end (38; 138), the conduit (134) extending between a radially-outer bypass path (24; 124) and a radially-inner core gas path (26; 126), the conduit (134) having a plurality of apertures (150; 250; 350) spaced-apart from one another around a circumference of the conduit (134) and fluidly connecting the bypass path (24; 124) to the core gas path (26; 126) upstream of the downstream end (38; 138).

2. The exhaust mixer of claim 1, wherein the apertures (250) are circular apertures (250) equally interspaced from one another around the circumference of the conduit (134).

3. The exhaust mixer of claim 1, wherein the apertures (150; 350) are rectangular apertures (350) equally interspaced from one another around the circumference of the conduit (134).

4. The exhaust mixer of claim 1, 2 or 3, being of a forced mixer type, wherein the conduit (134) has a plurality of circumferentially distributed lobes (140) at the downstream end (138), the lobes (140) including alternating valleys (142) and crests (144), the valleys (142) and crests (144) having respective upstream ends merging with an annular segment of the conduit (134) and fanning out in opposite radial orientations from the upstream ends to the downstream end (138).

5. The exhaust mixer of claim 4, wherein the apertures (150; 250; 350) are disposed in the valleys (142).

6. The exhaust mixer of claim 4, wherein the apertures (150; 250; 350) are disposed in the crests (144).

7. The exhaust mixer of claim 4, wherein the apertures (150; 250; 350) are disposed both in the crests (144) and in the valleys (142).

8. The exhaust mixer of any of claims 4 to 7, wherein the downstream end (138) has radially oriented portions (156) between the valleys (142) and crests (144), the radially oriented portions (156) being scalloped axially inwardly.

9. A turbofan engine (10) comprising the exhaust mixer (32...332) of any preceding claim.

10. A method of operating a turbofan engine (12) including separating an intake flow into a coregas flow (26; 126) and a bypass flow (24; 124), generating a hot annular stream (154) of combustion gasses exiting a combustion chamber (16) in the core gas flow (26; 126), and recombining the core gas flow (26; 126) and the bypass flow (24; 124) downstream of the combustion chamber (16), the method comprising pre-mixinga portion of at least one of the core gas flow (26; 126) and the bypass flow (24; 124) with the other downstream of the combustion chamber (16) and upstream of recombining the core gas flow (26; 126) and the bypass flow (24; 124).

11. The method of claim 10, further comprising forcing the mixing of the core gas flow (26; 126) and the bypass flow (24; 124) including creating radially extending and circumferentially alternating plumes of core gas flow (26; 126) and bypass flow (24; 124) immediately upstream of said recombining.

12. The method of claim 11, wherein the pre-mixing is performed during the formation of the plumes.

13. The method of claim 11 or 12, wherein the pre-mixing includes pre-mixing a portion of both the core gas flow (26; 126) and the bypass flow (24; 124) with the other within the plumes.

14. The method of any of claims 10 to 13, further comprising compressing the core gas flow (26; 126) upstream of the combustion chamber (16) with a compressor (14), and extracting energy from the combustion gasses downstream of the combustion chamber (16) with a turbine (18), and driving the compressor (14) with the turbine (18).

15. The method of claim 14 further comprising compressing the bypass flow (24; 124) using a fan (12), and driving the fan (12) with the turbine (18).
